# EUROPÄISCHE PATENTSCHRIFT

(11) **EP 4 395 598 B1**
(45) Veröffentlichungstag und Bekanntmachung des Hinweises auf die Patenterteilung: **22.07.2026**
(21) Anmeldenummer: 22769966.7
(22) Anmeldetag: 30.08.2022
(51) Int. Cl.: A43B 13/02, A43B 17/00

(54) **SOHLE EINES SCHUHS UND EINLEGESOHLE ZUM EINLEGEN IN EINEN SCHUH**
SOLE OF A SHOE AND INSOLE FOR INSERTION INTO A SHOE
SEMELLE DE CHAUSSURE ET SEMELLE INTÉRIEURE DESTINÉE À ÊTRE INSÉRÉE DANS UNE CHAUSSURE

(30) Priorität: 01.09.2021 DE 202021104706 U
(43) Veröffentlichungstag der Anmeldung: 10.07.2024
(73) Patentinhaber: Sextl, Andreas, 93426 Roding (DE); Meister, Patrick, 86911 Diessen a. A. (DE)
(72) Erfinder: Sextl, Andreas, 93426 Roding (DE); Meister, Patrick, 86911 Diessen a. A. (DE)
(74) Vertreter: Maiwald GmbH
(86) Internationale Anmeldenummer: PCT/EP2022/074060
(87) Internationale Veröffentlichungsnummer: WO 2023/031185

(56) Entgegenhaltungen:
- EP-A1- 3 319 469
- WO-A1-2016/185498
- US-A1- 2005 054 963
- US-A1- 2021 023 816

## Beschreibung

### Technisches Gebiet

Die Erfindung betrifft u.a. einen Schuh, eine Sohle eines Schuhs, eine Einlegesohle zum Einlegen in einen Schuh, ein Verfahren zur Herstellung einer Einlegesohle und die Verwendung einer Einlegesohle in einem Schuh.

### Stand der Technik

Aus dem Stand der Technik ist bekannt, dass je nach Verwendungszweck eines Schuhs die Gesamtkonfiguration des Obermaterials und der Sohlenstruktur erheblich variieren kann. Insbesondere ein Sportschuh zeichnet sich hierbei typischerweise durch eine komprimierbare und flexible Sohlenstruktur aus, welche eine Vielzahl zusätzlicher Funktionselemente wie beispielsweise Moderatoren, flüssigkeitsgefüllte Kammern, Dämpfungskomponenten oder Elemente zur Bewegungsbeeinflussung aufweist. Diese Funktionselemente erfüllen insbesondere orthopädische Zwecke und/oder können die Laufperformance des Sportlers steigern. Unter dem Begriff "Laufperformance" versteht der Fachmann das Maß an Zielerreichung, welches der Läufer/Sportler bei maximalem Abruf seiner Leistung verwirklicht, d.h. das Optimum seiner Leitungsfähigkeit.

Beispielsweise offenbart die US 5,052,130 B einen Laufschuh, bei welchem ein blattfederartiges elastisches Element aus faserverstärkten Polymermaterial fest zwischen der Außen- und Mittelsohle integriert ist. Auf Grund der vorbestimmten festen Anordnung in der Schuhsohlenstruktur und einer entsprechenden Biegecharakteristik verbiegt sich das elastische Element zusammen mit der Schuhsohle im Bereich des Fußballens des Sportlers und wirkt bei jedem Schritt mit der natürlichen Federwirkung des Fußbiomechanismus zusammen. Auf diese Weise wird die natürliche Fußbewegung des Läufers durch Speicherung und Abgabe von Energie unterstützt und der Laufprozess optimiert. Das Dokument EP 3,319,469 A1 offenbart die Merkmale des Oberbegriffs des Anspruchs 1.

Die Herstellung des oben beschriebenen Schuhwerks verursacht jedoch deutlich höhere Kosten als die Produktion von Schuhen ohne ein Funktionselement. Darüber hinaus besteht der Bedarf, auch Sportschuhe hinsichtlich ihrer Wirkung auf die Laufperformance des Sportlers mit einfachen Mitteln und kostengünstig zu optimieren.

### Darstellung der Erfindung

Der Erfindung liegt die Aufgabe zugrunde, einen Schuh, insbesondere Sportschuh hinsichtlich seiner Wirkung auf die Laufperformance des Sportlers variabel und/oder verbessert gestalten zu können, insbesondere zu optimieren.

Erfindungsgemäß wird diese Aufgabe durch eine Einlegesohle mit den Merkmalen des Anspruchs 1 gelöst. In den Unteransprüchen finden sich vorteilhafte Ausgestaltungen der Erfindung.

Der Erfindung liegt dabei insbesondere die Erkenntnis zugrunde, dass ein Funktionselement, welches die Laufperformance positiv beeinflusst, ggf. auch nachträglich in einen Schuh eingesetzt werden kann. Gleichzeitig ist erkannt worden, dass ein möglichst flaches bzw. dünnes Funktionselement dazu beiträgt, die Passform und die bestehende Sohlenstruktur aus Außen-, Mittel- und Innensohle des Schuhs durch das eingelegte Funktionselement nicht wesentlich nachteilig zu verändern. Außerdem ist das Material und der Schichtaufbau des Funktionselements vorzugsweise derart zu gestalten, dass ein maximaler Federeffekt bei gleichzeitig hoher Bruchbeständigkeit unterstützt wird und die Form des Funktionselements an unterschiedliche Schuhgrößen angepasst werden kann.

Unter Nutzung dieser Erkenntnisse stellt die Erfindung gemäß Anspruch 1 eine Einlegesohle zum losen Einlegen in einen Schuh, bevorzugt zusätzlich zu einer losen, weiter bevorzugt unter eine lose Innensohle des Schuhs zur Verfügung. Die Einlegesohle weist zumindest eine erste Schicht aus carbonfaserverstärktem Kunststoff, eine oder mehrere Zwischenschichten und eine zweite Schicht aus carbonfaserverstärktem Kunststoff auf, wobei die Schichten zumindest abschnittsweise im Wesentlichen übereinander angeordnet sind.

Mit dem Begriff Innensohle ist in diesem Zusammenhang diejenige Sohle in einem Schuh gemeint, welche in direktem Kontakt mit dem Fuß bzw. dem Fußbett des Trägers ist. Unter losem Einlegen einer Einlegesohle oder einer losen Innensohle versteht sich, dass die entsprechende Sohle aus dem Schuh derart herausnehmbar und wieder einlegbar ist, dass keine festverbundenen Strukturen zwischen der Sohle und dem Schuh im Wesentlichen irreversibel verändert und/oder zerstört werden. Es ist jedoch aber auch denkbar, dass zwischen dem Schuh und der losen Einlege- bzw. Innensohle eine reversibel lösbare Verbindung besteht, zum Beispiel ein Klettverschluss, eine magnetische Verbindung oder Druckknöpfe.

Die erste und zweite Schicht kann insbesondere als eine obere bzw. untere Deckschicht ausgebildet sein. Anders ausgedrückt, die erste und zweite Schicht stellen insbesondere jeweils die äußerste Schicht des Schichtaufbaus der Einlegesohle dar. Es ist aber auch insbesondere denkbar, dass weitere Schichten außerhalb der ersten und zweiten Schicht liegen. Diese weiteren Schichten weisen jedoch keine Struktureigenschaften auf, die sich direkt auf die Laufperformance des Sportlers auswirken.

Die Erfindung ermöglicht somit beispielsweise, dass ein Schuh hinsichtlich seiner Wirkung auf die Laufperformance des Sportlers mit Hilfe der zusätzlich einlegbaren Einlegesohle variabel optimiert werden kann. Mit anderen Worten, die Einlegesohle kann zusätzlich in den Schuh eingelegt werden, jedoch auch wieder entfernt werden. Die erfindungsgemäße Sohle verbiegt sich zusammen mit der Schuhsohle im Bereich des Fußballens des Sportlers und wirkt bei jedem Schritt mit der natürlichen Federwirkung des Fußbiomechanismus zusammen. Damit wird die natürliche Fußbewegung des Läufers durch Speicherung und Abgabe von Verformungsenergie unterstützt und die Laufperformance gesteigert.

Der beschriebene Schichtaufbau aus carbonfaserverstärkten Kunststoff unterstützt außerdem eine derart dünne Schichtdicke der Einlegsohle, dass die Passform des Schuhs bei zusätzlich eingelegter Einlegesohle nicht zum Nachteil des Trägers verändert wird.

Die vorliegende Erfindung beschränkt sich nicht auf Sportschuhe, sondern umfasst jegliches Schuhwerk bzw. Arten von Schuhen.

Ein weiterer Vorteil besteht darin, dass carbonfaserverstärkter Kunststoff eine geringe Masse bei gleichzeitig hoher Steifigkeit aufweist. Damit erhöht die eingelegte Einlegesohle das Gesamtgewicht des Schuhs nur unwesentlich. Gleichzeitig ist die Bruchgefahr der Einlegesohle minimal.

Zudem ist es vorteilhaft, dass durch das Einlegen der Einlegsohle unter eine bereits vorhandene Innensohle der Fuß des Sportlers weiterhin nur mit dem Fußbett der vorhandenen Innensohle des Schuhs in direktem Kontakt ist. Dies ist insbesondere dann von Vorteil, wenn die Innensohle eine orthopädische Innensohle ist, wodurch dessen Eigenschaften sich weiterhin vorteilhaft auf den Verwender auswirken können. Dies schließt jedoch nicht aus, dass die Einlegesohle anstelle der bereits vorhandenen Innensohle eingelegt werden kann. Mit anderen Worten ausgedrückt, die Einlegesohle kann die bereits vorhandene Innensohle ersetzen.

Gemäß der Erfindung ist die Einlegesohle derart ausgestaltet, dass die eine oder jede der mehreren Zwischenschichten ein Carbonfaser-Gelege aufweisen, deren Carbonfasern im Wesentlichen unidirektional ausgerichtet sind. Eine unidirektionale Ausrichtung kann insbesondere eine unidirektionale Ausrichtung in Lauf- bzw. Längsrichtung sein, oder mit anderen Worten ausgedrückt, eine Ausrichtung von der Ferse zu den Zehen eines Fußes. Dies ist dahingehend vorteilhaft, dass die eine oder jede der mehreren Zwischenschichten der Einlegesohle eine hohe Festigkeit und Steifigkeit verleihen. Eine höhere Festigkeit und Steifigkeit beeinflusst letztendlich die Biegecharakteristik der Einlegesohle dahingehend positiv, dass eine entsprechend größere Menge an Verformungsenergie durch die Einlegesohle gespeichert und wieder abgegeben wird. Auf diese Weise kann der Laufprozess maximal unterstützt und die Laufperformance optimal gesteigert werden. Im Übrigen schützt eine hohe Materialfestigkeit die Einlegesohle vor Bruch.

Bevorzugt wird weiterhin für die Einlegesohle, dass die erste und zweite Schicht jeweils ein Carbonfaser-Gewebe aufweisen, deren Carbonfasern bevorzugt in Köperbindung gewebt sind. Dies ermöglicht es, dass die Einlegesohle auch gegenüber auftretenden Querkräften widerstandsfähig bleibt. Unter Querkräften sind die Kräfte zu verstehen, welche quer zur Laufrichtung auftreten, oder anders ausgedrückt, vom Innenrist zum Außenrist des Fußes.

In einer noch weiter bevorzugten Ausgestaltung ist die Einlegesohle derart ausgeführt, dass die Carbonfasern des Carbonfaser-Gewebes der ersten und zweiten Schicht relativ zu den Carbonfasern des Carbonfaser-Geleges der einen oder mehreren Zwischenschichten im Wesentlichen in einem 0°/90° Winkel ausgerichtet sind. Eine derartige Ausrichtung unterstützt eine maximale Steifigkeit, wodurch sowohl Längs- als auch Querkräfte bestmöglich aufgenommen werden können. Es ist jedoch auch denkbar, dass die Carbonfasern des Carbonfaser-Gewebes der ersten und zweiten Schicht relativ zu den Carbonfasern des Carbonfaser-Geleges der einen oder mehreren Zwischenschichten in einem anderen als einem 0°/90° Winkel ausgerichtet sind, beispielsweise in einem 0°/45° Winkel. Auf diese Weise kann bei Bedarf die Steifigkeit reduziert werden.

Gemäß der Erfindung ist die Einlegesohle darüber hinaus derart ausgestaltet, dass sich die erste und zweite Schicht und die eine oder mehreren Zwischenschichten durchgängig über den gesamten Verlauf der Einlegesohle erstrecken. Auf diese Weise sind die entsprechenden Struktureigenschaften besser über den gesamten Verlauf der Einlegesohle verteilt und können in jedem Bereich ihre Wirkung entfalten. Auf diese Weise kann die Einlegesohle die entsprechenden Kräfte optimal aufnehmen und wieder abgeben.

Weiter bevorzugt ist die Einlegesohle derart ausgeführt, dass die erste und zweite Schicht jeweils eine, bevorzugt durchgängig, im Wesentlichen planare Oberfläche ausbilden. Dies ermöglicht es, die Einlegesohle unter eine vorhandene Einlegesohle auf einfache Art und Weise einzulegen. Gleichzeitig verteilen sich die auf den Schuh einwirkenden Kräfte besser gleichmäßig über die bereits vorhandene Sohle auf die planare Oberfläche der eingelegten Einlegesohle. Auf diese Weise kann die Einlegesohle die entsprechenden Kräfte optimal aufnehmen und wieder abgeben. Zudem wird die vorhandene Innensohle homogener belastet, was den Laufkomfort verbessert.

Bevorzugt wird weiterhin, dass die Einlegesohle eine konstante Schichtdicke aufweist. Dies bietet den Vorteil, dass eine durchgehend gleichbleibende Schichtdicke über die gesamte Einlegesohle vorhanden ist. Damit können sich die auf den Schuh einwirkenden Kräfte über die vorhandenen Sohlen gleichmäßig auf die eingelegte Einlegesohle verteilen. Auf diese Weise kann die Einlegesohle die entsprechenden Kräfte optimal aufnehmen und wieder abgeben.

Weiterhin wird bevorzugt, dass die Einlegesohle eine Schichtdicke von höchstens 1,2 mm, bevorzugt höchstens 1,0 mm aufweist, und/oder die erste und zweite Schicht jeweils eine Schichtdicke von höchstens 0,3 mm, bevorzugt höchstens 0,25 mm, und/oder die eine oder mehreren Zwischenschichten insgesamt eine Schichtdicke von höchstens 0,6 mm, höchstens 0,5 mm, aufweist. Diese Konfiguration verwirklicht eine Einlegesohle, die ein optimales Verhältnis zwischen maximaler Festigkeit bzw. Steifigkeit und minimaler Schichtdicke aufweist und die Laufperformance bestmöglich verbessert.

Bevorzugt wird weiterhin, dass ein Bereich der Einlegsohle, insbesondere ein Bereich, der nicht von einer Ferse belastet wird, eine (insbesondere einzige) Wölbung aufweist, wobei die Wölbung insbesondere einen Scheitelpunkt mit zwei Schenkeln aufweist, wobei ein hinterer Schenkel an einen Bereich anschließt, der von der Ferse belastet wird, und ein vorderer Schenkel an den Bereich anschließt, der von der Ferse nicht belastet wird, oder Teil dessen ist. Vorzugsweise liegt der vordere Schenkel zumindest abschnittsweise im Bereich des Fußballens. Weiter bevorzugt erstrecken sich mehrere Scheitelpunkte durchgehend von einem Innenrist zu einem Außenrist der Einlegesohle bzw. reihen sich aneinander, betrachtet in der links-rechts-Richtung. Unter einem Scheitelpunkt ist der Punkt in einer Ebene zu verstehen, die von vorne nach hinten in Bezug auf den Fuß verläuft, also in Laufrichtung, in dem sich die Krümmung/Steigung ändert. Eine Aneinanderreihung von Scheitelpunkten in verschiedenen Ebenen (in links-rechts Richtung) können einen Scheitelpunktverlauf in dieser Richtung (also von rechts nach links) ausbilden. Anders ausgedrückt, um die natürliche Federwirkung des Fußbiomechanismus noch weiter zu unterstützen, kann beispielsweise ein in Laufrichtung vorderer Bereich der Einlegsohle, insbesondere ein Bereich, der nicht von der Ferse belastet wird, bzw. ein Bereich, der sich vom Fußgewölbe bis zum Zehenbereich in Laufrichtung erstreckt, durchgehend gewölbt geformt sein. Bei dem vorderen Bereich kann es sich um zumindest die Hälfte der Sohle handeln, die vorzugsweise dem Vorderfuß entspricht.

Mit anderen Worten ausgedrückt, der benannte vordere Bereich ist als eine einzige durchgehende Wölbung ausgebildet, sodass sich zwischen Fersenbereich und Zehenbereich in einer Schnittansicht in Längsrichtung (dies entspricht der Richtung der Längserstreckung der Einlegesohle) ein Scheitelpunkt bildet, der auf einer Oberseite der Einlegesohle (Seite, die vom Fuß belastet wird) liegt. Ein entsprechender hinterer Schenkel des Scheitels beginnt beispielsweise am oder vor dem Fersenbereich des Scheitels der Einlegesohle und ein vorderer Schenkel beginnt beispielsweise am Zehenbereich der Einlegesohle oder ist Teil des Zehenbereichs der Einlegesohle. Der Scheitelpunktverlauf verläuft von der Außenseite der Einlegesohle (als gedachte Linie) im Wesentlichen quer, bevorzugt im Wesentlichen senkrecht, zur Laufrichtung oder vom Innenrist zum Außenrist der Einlegesohle. Für den Fachmann ist klar, dass sich an alle Scheitelpunkte des Scheitelpunktverlaufs entsprechend der oben beschriebene vordere und hintere Schenkel anschließt.

Weiterhin wird bevorzugt, dass in einem Bereich der Einlegsohle, insbesondere ein Bereich, der von einer Ferse belastet wird, eine Sicke vorhanden ist, die insbesondere im Wesentlichen länglich ist und/oder der Länge nach in die Laufrichtung der Einlegesohle verläuft. Anders ausgedrückt hat es sich als vorteilhaft erwiesen, wenn insbesondere im Rückfußbereich der Einlegesohle eine Sicke bzw. Vertiefung eingearbeitet ist. Die beispielsweise länglich ausgebildete Sicke verläuft insbesondere im Fersenbereich im Wesentlichen der Länge nach in Laufrichtung der Einlegesohle, wobei die Vertiefung der Sicke beispielweise nach unten in Richtung der Auflagefläche der Einlegesohle im Schuh ausgebildet ist. Dies hat den Effekt, dass der in Laufrichtung rückwärtige Teil der Einlegesohle, insbesondere der Fersenbereich der Einlegesohle, eine noch höhere Steifigkeit aufweist und somit die Stabilität des Rückfußes und letztendlich die Federwirkung erhöht wird.

Bevorzugt ist die Einlegesohle darüber hinaus derart ausgestaltet, dass eine äußerste Schicht des Schichtaufbaus und/oder der Einlegesohle ein Abreißgewebe ist. Auf diese Weise wird erreicht, dass der Fuß auf der Einlegesohle gefedert gelagert und damit der Trittkomfort erhöht ist. Gleichzeitig wird auf Grund der rauen Oberfläche des Abreißgewebes im Vergleich zu einer geschliffenen Carbonoberfläche ein besserer Halt für den Fuß auf der Einlegesohle gewährleistet und/oder für einen besseren Halt der Einlegesohle im Schuh gesorgt.

Außerdem wird für die Einlegesohle bevorzugt, dass diese mit einem Schaummaterial, zumindest teilweise und insbesondere vollständig, umschäumt ist. Dies hat den Vorteil, dass der Fuß auf der Einlegesohle gefedert gelagert und damit den Trittkomfort erhöht ist. Gleichzeitig kann durch die Wahl eines geeigneten Schaumaterials ein Reibungskoeffizient eingestellt werden, sodass ein besserer Halt für den Fuß auf der Einlegesohle gewährleistet ist.

Weiter angedacht ist außerdem ein Schuh mit der oben beschriebenen Einlegesohle. Die ebenfalls oben beschriebenen technischen Effekte und Vorteile sind entsprechend für den Schuh mit der Einlegesohle übertragbar.

Auch angedacht ist die Verwendung einer Einlegesohle für einen Schuh zur Steigerung der Laufperformance, wobei die Einlegesohle lose in den Schuh, bevorzugt zusätzlich zu einer losen, weiter bevorzugt unter eine lose Innensohle des Schuhs, eingelegt wird.

Auf diese Weise kann ein Schuh hinsichtlich seiner Wirkung auf die Laufperformance des Sportlers mit Hilfe der zusätzlich einlegbaren Einlegesohle variabel optimiert werden. Mit anderen Worten, die Einlegesohle kann zusätzlich in den Schuh eingelegt werden, jedoch auch wieder entfernt werden.

Außerdem ist ein erfindungsgemäßes Verfahren zum Herstellen einer Einlegesohle, insbesondere mit der erfindungsgemäßen Einlegesohle, zum losen Einlegen in einen Schuh denkbar, das folgende Schritte aufweist:
- Bereitstellen eines mit Kunststoff, bevorzugt Epoxidharz, vorimprägnierten Carbonfaser-Geleges, dessen Carbonfasern im Wesentlichen unidirektional ausgerichtet sind;
- Bereitstellen eines mit Kunststoff, bevorzugt Epoxidharz, vorimprägnierten Carbonfaser-Gewebes, dessen Carbonfasern vorzugsweise in Köperbindung gewebt sind;
- Schichten des vorimprägnierten Carbonfaser-Geleges und des vorimprägnierten Carbonfaser-Gewebes zu einem Schichtaufbau derart, dass die Carbonfasern des Carbonfaser-Gewebes eine erste und eine zweite Schicht bilden, und die Carbonfasern des Carbonfaser-Geleges eine oder mehrere Zwischenschichten bilden, die zwischen der ersten und zweiten Schicht angeordnet sind, wobei die Carbonfasern des Carbonfaser-Geleges relativ zu den Carbonfasern des Carbonfaser-Gewebes, welches die erste und zweite Schicht bildet, im Wesentlichen in einem 0°/90° Winkel ausgerichtet sind,

wobei die Carbonfasern der einen oder jeder der mehreren Zwischenschichten im Wesentlichen unidirektional ausgerichtet sind und
wobei sich die erste und zweite Schicht und die eine oder mehreren Zwischenschichten durchgängig über den gesamten Verlauf der Einlegesohle erstrecken;
   - Ausformen des Schichtaufbaus durch thermisches Härten zu einer planaren kunststoffverstärkten Carbonfaserplatte mit bevorzugt konstanter Schichtdicke;
   - Ausschneiden der Einlegesohle aus der kunststoffverstärkten Carbonfaserplatte.

Dieses Herstellungsverfahren bietet unter anderem den Vorteil, zunächst einen kostengünstigen Plattenrohling herzustellen, aus welchem anschließend individuell in einem unabhängigen Verfahrensschritt passende Einlegesohlen geschnitten werden können. Der Schneidvorgang kann insbesondere ein Wasserstrahlsschnitt sein. Jedoch sind auch andere mechanische Schnittverfahren mit Hilfe von Schneidwerkzeugen möglich. Außerdem ist es vorteilhaft, dass auf eine aufwendige nachträgliche Bearbeitung der Schnittkanten verzichtet werden kann. Die Kanten können jedoch durch einfaches Verschleifen zusätzlich bündig geglättet werden.

### Kurze Beschreibung der Zeichnungen

Weitere Merkmale und Vorteile der Vorrichtungen ergeben sich aus der nachfolgenden Beschreibung von Ausführungsformen unter

Bezugnahme auf die beiliegenden Zeichnungen. Von diesen Zeichnungen zeigt:
- Fig. 1: eine schematische Draufsicht einer Zwischenschicht der erfindungsgemäßen Einlegesohle gemäß einer ersten Ausführungsform;
- Fig. 2: eine schematische Draufsicht einer ersten oder zweiten Schicht der erfindungsgemäßen Einlegesohle gemäß einer ersten Ausführungsform;
- Fig. 3: einen schematischen Aufbau der Einlegesohle in einer Schnittansicht;
- Fig. 4: einen schematischen Aufbau der Einlegesohle gemäß einer zweiten Ausführungsform in einer Schnittansicht;
- Fig. 5: eine schematische Draufsicht der Einlegesohle gemäß der zweiten Ausführungsform.

### Beschreibung von Ausführungsformen

Es ist für den Fachmann ersichtlich, dass einzelne, jeweils in verschiedenen Ausführungsformen beschriebene Merkmale auch in einer einzigen Ausführungsform umgesetzt werden können, sofern sie nicht strukturell inkompatibel sind. Gleichermaßen können verschiedene Merkmale, die im Rahmen einer einzelnen Ausführungsform beschrieben sind, auch in mehreren Ausführungsformen einzeln oder in jeder geeigneten Unterkombination vorgesehen sein.

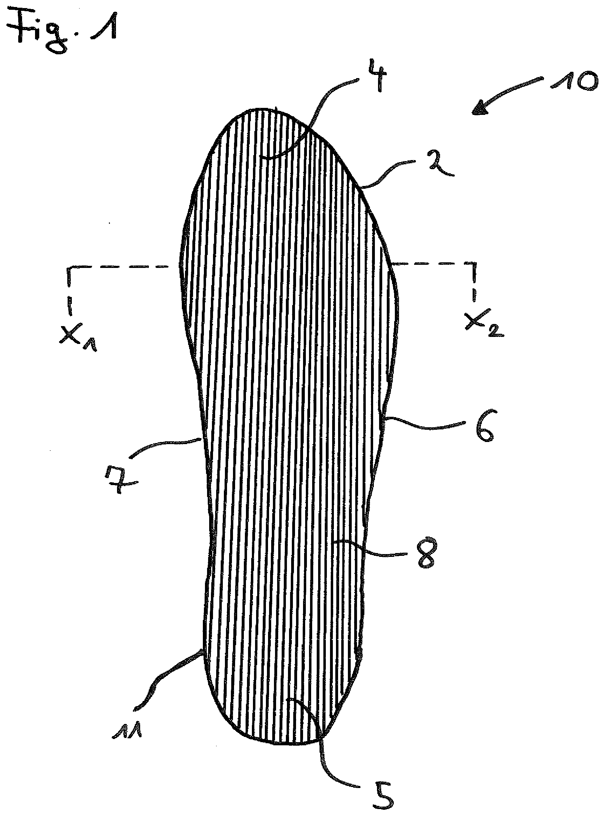

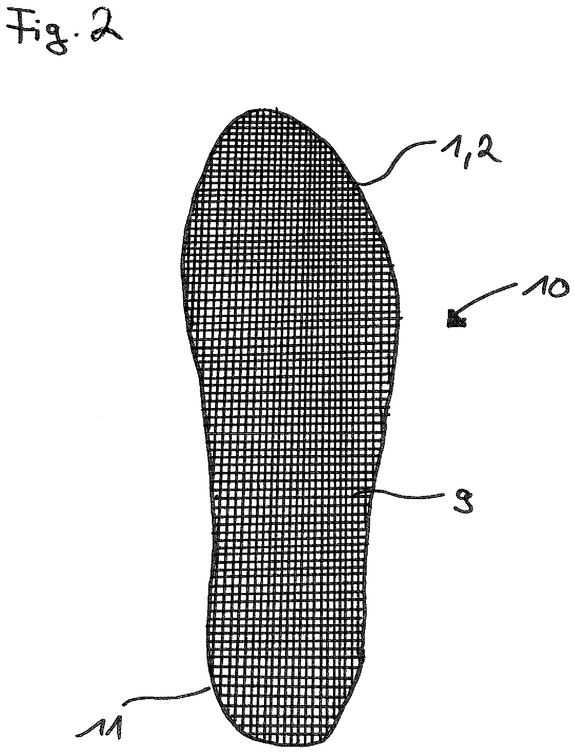

Figur 1 zeigt eine schematische Draufsicht einer Zwischenschicht 2 der Einlegesohle 10 gemäß einer ersten Ausführungsform. Die Zwischenschicht 2 erstreckt sich hierbei vollständig bis zur äußeren Kante 11 der Zwischenschicht 2. Die äußere Kante 11 verläuft insbesondere derart, dass die Form im Wesentlichen dem Abdruck eines menschlichen rechten Fußes ähnelt. Dieselbe äußere Kante 11 begrenzt insbesondere auch die erste 1 und zweite 3 Schicht (Figur 2). Damit entspricht die Form der Zwischenschicht 2 in Figur 1 auch der Form der Einlegesohle 10 in einer Draufsicht; die Zwischenschicht 2 und die erste 1 und zweite 3 Schicht sind also deckungsgleich. Weiterhin weisen die erste 1 bzw. die zweite 3 Schicht und die Zwischenschicht 2 einen hinteren Fersenbereich 5, einen vorderen Zehenbereich 4, einen Innenrist 7 und einen Außenrist 6 auf. Für den Fachmann ist im Übrigen klar, dass die Form der Schichten bzw. der Einlegesohle 10 im Wesentlichen auch dem Abdruck eines menschlichen linken Fußes ähneln kann. Es ist jedoch aber auch denkbar, dass von der charakteristischen linken oder rechten Form eines Fußabdrucks derart abgewichen werden kann, dass sich die Einlegesohle 10 sowohl zum Einlegen in einen rechten wie auch linken Schuh eignet. An dieser Stelle ist für den Fachmann klar, dass der Verfahrensschritt des Ausschneidens der Einlegesohle aus der kunststoffverstärkten Carbonfaserplatte gemäß dem Verfahren zur Herstellung einer Einlegesohle derart ausgeführt wird, dass die oben beschriebenen Formen entsprechend für die Einlegesohle verwirklicht werden.

In Figur 1 ist weiterhin der unidirektionale Verlauf der Carbonfasern des Carbonfaser-Geleges 8 der Zwischenschicht 2 schematisch dargestellt. Alle Fasern verlaufen hier im Wesentlichen vom Fersenbereich 5 in Richtung des Zehenbereichs 4. Im Gegensatz dazu weisen die erste 1 und zweite 3 Schicht ein Carbonfaser-Gewebe 9 auf (Figur 2), welches in Köperbindung gewebt ist. Die entsprechenden Carbonfasern sind hier unidirektional vom Fersenbereich in Richtung des Zehenbereichs 5 bzw. senkrecht dazu vom Innenrist 7 zum Außenrist 6 angeordnet und bilden eine Art Netzstruktur.

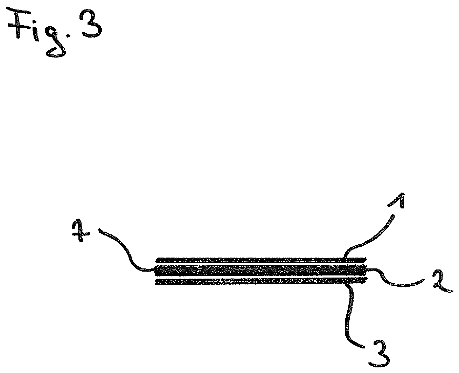

Figur 3 zeigt eine schematische Schnittansicht (von X₁ nach X₂) der Einlegesohle 10 aus Figur 1. Die erste Schicht 1 befindet sich dabei oberhalb und die zweite Schicht 3 unterhalb der Zwischenschicht 2. Die Zwischenschicht 2 ist also zwischen der ersten 1 und zweiten 3 Schicht sandwich-artig eingeschichtet. Die Schichten sind im Wesentlichen horizontal übereinander gestapelt und weisen durchgehend dieselbe Schichtdicke auf. Alle Schichten 1, 2, 3 erstrecken sich vertikal bis zum äußeren Rand 7 und schließen dort bündig ab. Dieser Schichtaufbau ist entsprechend auch in den übrigen Bereichen der Einlegesohle 10 derart verwirklicht. Die Oberfläche der ersten 1 und zweiten 3 Schicht ist insbesondere über den gesamten Verlauf der Einlegesohle 10 planar gestaltet.

Die Carbonfasern des Carbonfaser-Gewebes 9 und des Carbonfaser-Geleges 8 sind in den entsprechenden Schichten in eine Kunststoffmatrix eingebettet, welche beispielsweise ein Epoxidharz sein kann. Die Carbonfasern des Carbonfaser-Gewebes 9 sind vorzugsweise HS-Fasern (High Strain) und die Carbonfasern des Carbonfaser-Geleges 8 vorzugsweise HM-Fasern (High Modulus).

Die oben beschriebene Einlegesohle kann beispielsweise wie folgt eingesetzt werden. Die Einlegesohle wird zunächst unter die vorhandene lose Innensohle eines Schuhs eingeschoben. Während des Laufvorgangs verbiegt sich die eingelegte Einlegesohle bei jedem Schritt mit dem Schuh im Bereich des Fußballens des Sportlers auf Grund ihrer definierten Biegecharakteristik und Anordnung im Schuh. Die eingelegte Einlegesohle passt sich der natürlichen Bewegung des Fußes an und arbeitet mit der natürlichen Federwirkung des Fußbiomechanismus zusammen. Die Schichten aus carbonfaserverstärktem Kunststoff speichern und geben als Reaktion auf diese Biegung bei jedem Schritt Energie ab, wodurch die Laufperformance gesteigert wird.

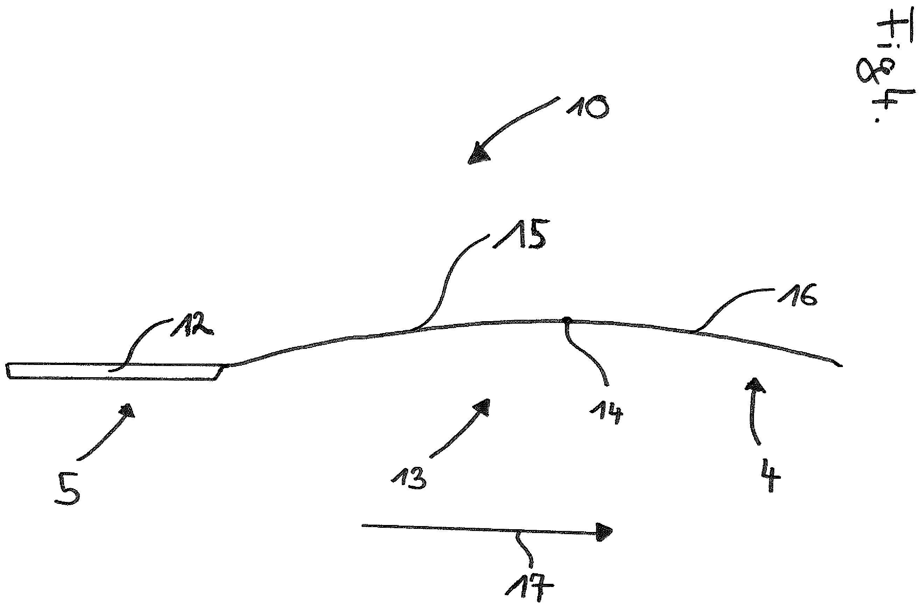

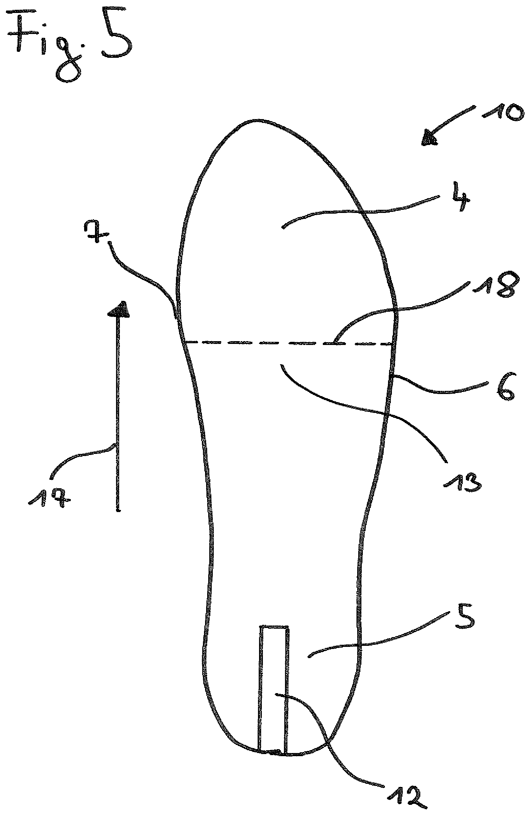

Während in der ersten Ausführungsform der Einlegesohle 10 die Ober- und Unterseite eine durchgängig planare Oberfläche aufweisen, besitzt die Einlegesole der zweiten Ausführungsform die nachfolgend beschriebenen Merkmale. Der Querschnitt der Figur 3 ergibt sich auch bei der zweiten Ausführungsform. Figur 4 zeigt eine Einlegesohle gemäß der zweiten Ausbildungsform in einer Schnittansicht und Figur 5 diese in einer Draufsicht. Im Gegensatz zu der in den Figuren 1 und 2 beschriebenen Ausführungsform der Einlegesohle 10 weist die in Figur 4 und 5 dargestellte Einlegesohle 10 eine an den Fersenbereich 5 anschließende und sich bis an den Rand des Zehenbereichs 4 ersteckende Wölbung 13 auf. Der Zehenbereich 4 ist hierbei Teil der Wölbung 13.

Die Wölbung 13 besitzt einen Scheitelpunkt 14, der sich auf der Oberseite der Einlegesohle (Seite, die vom Fuß belastet wird) befindet. Der Scheitelpunktverlauf 18 aneinander gereihter Scheitelpunkte der Wölbung 13 verläuft insbesondere in einer gedachten Linie vom Innenrist 7 zum Außenrist 6 der Einlegesohle 10, wie in Figur 5 schematisch angedeutet. Der hintere Schenkel 15 der Wölbung, die sich in der Schnittansicht von Figur 4 links des Scheitels 14 befindet, schließt an den Rand des Fersenbereichs 5 an. Der andere vordere Schenkel 16 des Scheitels 14 ist Teil des Zehenbereichs 4 und findet sein Ende am Rand der Einlegesohle 10 im Zehenbereich 4. Die Wölbung 13 der Einlegesohle 10 ist nach oben in der Schnittansicht in Richtung der Fußsohle des Läufers gewölbt. Der Rand der Wölbung 13 kann beispielsweise auf einem Kreis liegen. Der Kreisradius kann beispielsweise 100 cm betragen.

Wirkt die Gewichtskraft des Fußes auf die Einlegesohle, wird die Wölbung 13 durchgebogen und eine Gegenkraft von beispielsweise 50 N wirkt der Gewichtskraft des Fußes entgegen. Auf diese Weise wird noch mehr Verformungsenergie während der natürlichen Fußbewegung des Läufers gespeichert und abgegeben, wodurch sich die Laufperformance noch weiter erhöht.

Darüber hinaus zeigen Figur 4 und Figur 5 eine in Laufrichtung längliche, beispielsweise 7,5 cm (bevorzugt zwischen 4 bis 10 cm, weiter bevorzugt zwischen 6 bis 9 cm) lange und ca. 1 cm (bevorzugt zwischen 0,5 und 2,0 cm) tiefe, in den Fersenbereich 5 eingearbeitete Sicke 12, wobei die Vertiefung der Sicke nach unten in Richtung der Auflagefläche der Einlegesohle im Schuh eingeprägt ist. Die Sicke kann auch in anderen dem Fachmann bekannten Ausbildungsformen vorliegen, um den Fersenbereich 5 sowohl in Längs- und/oder Querrichtung weiter zu stabilisieren. Auf Grund der höheren Steifigkeit des Fersenbereichs 5 der Einlegesohle und der damit verbundenen höheren Stabilität des Rückfußbereichs wird die Federwirkung noch weiter erhöht. Es versteht sich, dass die Wölbung 13 und die Sicke 12 nicht zusammen, sondern auch unabhängig voneinander in der Einlegesohle vorliegen können. Bspw. können die Wölbung 13 und/oder die Sicke 12 mit der ersten Ausführungsform kombiniert werden.

Der Übergang vom Fersenbereich zur Wölbung 13 kann abrupt sein, da sich die Steigung und sogar Krümmung ändert.

Es ist außerdem vorteilhaft für alle erfindungsgemäßen Ausführungsformen, wenn die äußerste Schicht der Einlegesohle ein Abreißgewebe ist, welches eine raue Oberfläche ausbildet. Auf diese Weise kann auf ein aufwendiges Schleifen verzichtet werden, und eine höhere Trittsicherheit ist gewährleistet.

Die Einlegesohle 10 gemäß der ersten und/oder zweiten Ausführungsform kann optional gemäß einer dritten Ausführungsform mit einem Schaummaterial umschäumt werden. Auf diese Weise kann beispielsweise der Trittkomfort erhöht werden. Hierbei bietet sich zudem der Vorteil einen Teil der Einlegesohle 10 (aus Carbonfaser) durch Schaummaterial zu ersetzen ohne die Gesamtgröße der (umschäumten) Einlegesohle zu ändern. Die Form der Einlegesohle 10 (aus Carbonfaser), die sich innerhalb des Schaummaterials befindet, kann hierbei sogar soweit reduziert werden, dass diese lediglich eine im Wesentlichen länglichen vom Fersenbereich 5 zum Zehenbereich sich erstreckenden Streifenform bildet. Für den Fachmann ist klar, dass eine derartige Reduktion vorteilhafter Weise nur soweit erfolgen sollte, solange sich weiterhin der vorteilhafte Effekt ergibt, dass die reduzierte Einlegesohle aus Carbonfaser innerhalb des Schaummaterials die natürliche Fußbewegung des Läufers durch Speicherung und Abgabe von Verformungsenergie unterstützt und die Laufperformance gesteigert. Die umschäumte Einlegesohle könnte dann nicht nur zusätzlich zu einer Einlegesohle, sondern auch anstelle einer anderen Einlegesohle in einem (Sport)Schuh verwendet werden.

Vorstehend wurde die Erfindung gemäß verschiedenen Ausführungsformen, die alle miteinander kombinierbar sind, auch in Teilen, hinsichtlich einer zusätzlichen Einlegesohle anhand der Figuren beschrieben. Die Erfindung kann aber auch, wie angedeutet, in einer Einlegesohle umgesetzt werden, die eine andere Einlegesohle ersetzt bzw. unnötig macht. Sie kann ein Fußbett aufweisen. Die Erfindung kann ebenso in einer Sohle angewendet werden, die fest in einem Schuh, bspw. als Schuhsohle bzw. Laufsohle, integriert ist.

### Bezugszeichenliste

- 1: erste Schicht
- 2: Zwischenschicht
- 3: zweite Schicht
- 4: Zehenbereich
- 5: Fersenbereich
- 6: Außenrist
- 7: Innenrist
- 8: unidirektionaler Faserverlauf; Carbonfaser-Gelege
- 9: Carbonfaser-Gewebe
- 10: Einlegesohle
- 11: äußere Kante
- 12: Sicke
- 13: Wölbung
- 14: Scheitelpunkt
- 15: hinterer Schenkel
- 16: vorderer Schenkel
- 17: Laufrichtung
- 18: Scheitelpunktverlauf

## Patentansprüche

1. Einlegesohle (10) zum bevorzugt losen Einlegen in einen Schuh, bevorzugt zusätzlich zu einer losen, weiter bevorzugt unter eine lose Innensohle des Schuhs, wobei die Einlegesohle zumindest folgenden Schichtaufbau aufweist:
eine erste Schicht (1) aus carbonfaserverstärktem Kunststoff,
eine oder mehrere Zwischenschichten (2) und
eine zweite Schicht (3) aus carbonfaserverstärktem Kunststoff,
wobei die Schichten (1, 2, 3) zumindest abschnittsweise im Wesentlichen übereinander angeordnet sind,
wobei die eine oder jede der mehreren Zwischenschichten (2) ein Carbonfaser-Gelege (8) aufweisen, deren Carbonfasern im Wesentlichen unidirektional ausgerichtet sind, **dadurch gekennzeichnet,**
**dass** sich die erste und zweite Schicht (1, 3) und die eine oder mehreren Zwischenschichten (2) durchgängig über den gesamten Verlauf der Einlegesohle erstrecken.

2. Einlegesohle nach einem der vorherigen Ansprüche, **dadurch gekennzeichnet, dass** die erste und zweite Schicht (1, 3) jeweils ein Carbonfaser-Gewebe (9) aufweisen, deren Carbonfasern bevorzugt in Köperbindung gewebt sind.

3. Einlegesohle nach Anspruch 2, **dadurch gekennzeichnet, dass** die Carbonfasern des Carbonfaser-Gewebe (9 ) der ersten und zweiten Schicht (1, 3) relativ den Carbonfasern des Carbonfaser-Geleges (8) der einen oder mehreren Zwischenschichten (2) im Wesentlichen in einem 0°/90° Winkel ausgerichtet sind.

4. Einlegesohle nach einem der vorherigen Ansprüche, **dadurch gekennzeichnet, dass** die erste und zweite Schicht (1, 3) jeweils eine, bevorzugt durchgängig, im Wesentlichen planare Oberfläche ausbilden.

5. Einlegesohle nach einem der vorherigen Ansprüche, **dadurch gekennzeichnet, dass** die Einlegesohle (10) eine konstante Schichtdicke aufweist.

6. Einlegesohle nach einem der vorherigen Ansprüche, **dadurch gekennzeichnet, dass** die Einlegesohle (10) eine Schichtdicke von höchstens 1,2 mm, bevorzugt höchstens 1,0 mm aufweist, und/oder die erste und zweite Schicht (1, 3) jeweils eine Schichtdicke von höchstens 0,3 mm, bevorzugt höchstens 0,25 mm, und/oder die eine oder mehreren Zwischenschichten (2) insgesamt eine Schichtdicke von höchstens 0,6 mm, höchstens 0,5 mm, aufweist.

7. Einlegesohle nach einem der vorherigen Ansprüche, **dadurch gekennzeichnet, dass** ein Bereich der Einlegesohle (10), insbesondere ein Bereich, der nicht von einer Ferse belastet wird, eine, bevorzugt einzige, Wölbung (13) aufweist, wobei die Wölbung insbesondere einen Scheitelpunkt mit zwei Schenkeln (15, 16) aufweist, wobei insbesondere ein hinterer (15) Schenkel an einen Bereich anschließt, der von der Ferse belastet wird, und insbesondere ein vorderer Schenkel (16) an den Bereich anschließt oder Teil dessen ist, der von der Ferse nicht belastet wird.

8. Einlegesohle nach einem der vorherigen Ansprüche, **dadurch gekennzeichnet, dass** in einem Bereich der Einlegsohle (10), insbesondere ein Bereich, der von einer Ferse belastet wird, eine Sicke (12) vorhanden ist, die insbesondere im Wesentlichen länglich ist und/oder der Länge nach in eine Laufrichtung (17) der Einlegesohle (10) verläuft.

9. Einlegesohle nach einem der vorherigen Ansprüche, **dadurch gekennzeichnet, dass** eine äußerste Schicht des Schichtaufbaus und/oder der Einlegesohle ein Abreißgewebe ist.

10. Einlegesohle nach einem der vorherigen Ansprüche, **dadurch gekennzeichnet, dass** diese mit einem Schaummaterial, insbesondere vollständig, umschäumt ist.

11. Schuh mit einer Einlegesohle nach einem der vorherigen Ansprüche.

12. Verwendung einer Einlegesohle (10) nach einem der Ansprüche 1-10 für einen Schuh zur Steigerung der Laufperformance, wobei die Einlegesohle lose (10) in den Schuh, bevorzugt zusätzlich zu einer losen, weiter bevorzugt unter eine lose Innensohle des Schuhs, eingelegt wird.

13. Verfahren zum Herstellen einer Einlegesohle, nach eine der Ansprüche 1-10, zum losen Einlegen in einen Schuh denkbar, das folgende Schritte aufweist:
- Bereitstellen eines mit Kunststoff, bevorzugt Epoxidharz, vorimprägnierten Carbonfaser-Geleges, dessen Carbonfasern vorzugsweise im Wesentlichen unidirektional ausgerichtet sind;
- Bereitstellen eines mit Kunststoff, bevorzugt Epoxidharz, vorimprägnierten Carbonfaser-Gewebes, dessen Carbonfasern vorzugsweise in Köperbindung gewebt sind;
- Schichten des vorimprägnierten Carbonfaser-Geleges und des vorimprägnierten Carbonfaser-Gewebes zu einem Schichtaufbau derart, dass die Carbonfasern des Carbonfaser-Gewebes eine erste und eine zweite Schicht bilden, und die Carbonfasern des Carbonfaser-Geleges eine oder mehrere Zwischenschichten bilden, die zwischen der ersten und zweiten Schicht angeordnet sind, wobei die Carbonfasern des Carbonfaser-Geleges relativ zu den Carbonfasern des Carbonfaser-Gewebes, welches die erste und zweite Schicht bildet, im Wesentlichen in einem 0°/90° Winkel ausgerichtet sind, wobei die Carbonfasern der einen oder jeder der mehreren Zwischenschichten im Wesentlichen unidirektional ausgerichtet sind und
wobei sich die erste und zweite Schicht und die eine oder mehreren Zwischenschichten durchgängig über den gesamten Verlauf der Einlegesohle erstrecken;
- Ausformen des Schichtaufbaus durch thermisches Härten zu einer planaren kunststoffverstärkten Carbonfaserplatte mit bevorzugt konstanter Schichtdicke;
- Ausschneiden der Einlegesohle aus der kunststoffverstärkten Carbonfaserplatte.

## Claims

1. Insole (10) for preferably loose insertion into a shoe, preferably in addition to a loose, more preferably under a loose insole of the shoe, the insole having at least the following layer structure:
a first layer (1) made of carbon fiber-reinforced plastic,
one or more intermediate layers (2) and
a second layer (3) made of carbon fiber-reinforced plastic,
wherein the layers (1, 2, 3) are arranged at least
partially essentially one above the other,
wherein the one or each of the one or more intermediate layers (2) comprise a carbon fiber non-crimp fabric (8), the carbon fibers of which are preferably aligned essentially unidirectionally,
**characterized in that**
the first and second layers (1, 3) and the one or more intermediate layers (2) extend continuously over the entire course of the insole.

2. Insole according to one of the preceding claims, **characterized in that** the first and second layers (1, 3) each comprise a carbon fiber woven fabric (9), the carbon fibers of which are preferably woven in a twill weave.

3. Insole according to claim 2, **characterized in that** the carbon fibers of the carbon fiber woven fabric (9) of the first and second layers (1, 3) are essentially aligned at a 0°/90° angle relative to the carbon fibers of the carbon fiber non-crimp fabric (8) of the one or more intermediate layers (2).

4. Insole according to one of the preceding claims, **characterized in that** the first and second layers (1, 3) each form a, preferably continuous, essentially planar surface.

5. Insole according to one of the preceding claims, **characterized in that** the insole (10) has a constant layer thickness.

6. Insole according to one of the preceding claims, **characterized in that** the insole (10) has a layer thickness of at most 1.2 mm, preferably at most 1.0 mm, and/or the first and second layers (1, 3) each have a layer thickness of at most 0.3 mm, preferably at most 0.25 mm, and/or the one or more intermediate layers (2) have a total layer thickness of at most 0.6 mm, at most 0.5 mm.

7. Insole according to one of the preceding claims, **characterized in that** an area of the insole (10), in particular an area that is not loaded by a heel, has a, preferably single, arching (13), the arching in particular having a vertex with two legs (15, 16), in particular a rear (15) leg adjoins an area that is loaded by the heel, and in particular a front leg (16) adjoins or is part of the area that is not loaded by the heel.

8. Insole according to one of the preceding claims, **characterized in that** in an area of the insole (10), in particular an area that is loaded by a heel, there is a bead (12), which is in particular essentially elongated and/or runs along its length in a running direction (17) of the insole (10).

9. Insole according to one of the preceding claims, **characterized in that** an outermost layer of the layer structure and/or of the insole is a tear-off fabric.

10. Insole according to one of the preceding claims, **characterized in that** it is foamed, in particular completely, with a foam material.

11. Shoe with an insole according to one of the preceding claims.

12. Use of an insole (10) according to one of claims 1-10 for a shoe to increase running performance, wherein the insole is loosely (10) inserted into the shoe, preferably in addition to a loose, more preferably under a loose insole of the shoe.

13. A method for producing an insole according to one of claims 1-10, optionally for loose insertion into a shoe, which comprises the following steps:
- Providing a carbon fiber non-crimp fabric pre-impregnated with plastic, preferably epoxy resin, the carbon fibers of which are preferably aligned essentially unidirectionally;
- Providing a carbon fiber woven fabric pre-impregnated with plastic, preferably epoxy resin, the carbon fibers of which are preferably woven in a twill weave;
- Stacking the pre-impregnated carbon fiber non-crimp fabric and the pre-impregnated carbon fiber woven fabric to form a layer structure such that the carbon fibers of the carbon fiber woven fabric form a first and a second layer, and the carbon fibers of the carbon fiber no-crimp fabric form one or more intermediate layers which are arranged between the first and second layers, the carbon fibers of the carbon fiber non-crimp fabric being oriented substantially at a 0°/90° angle relative to the carbon fibers of the carbon fiber woven fabric forming the first and second layers, wherein the carbon fibers of the one or of each of the one or more intermediate layers are essentially aligned unidirectionally and
wherein the first and second layers and the one or more intermediate layers extend continuously over the entire course of the insole;
- Forming the layer structure by thermal hardening into a planar plastic-reinforced carbon fiber plate with preferably a constant layer thickness;
- Cutting out the insole from the plastic-reinforced carbon fiber plate.

## Revendications

1. Semelle intérieure (10) destinée à être insérée dans une chaussure de préférence de façon amovible, de manière préférée en plus d'une semelle intérieure amovible de la chaussure, de manière plus préférée sous une semelle intérieure amovible, dans laquelle la semelle intérieure présente au moins la structure de couches suivante :
une première couche (1) en matière plastique renforcée par des fibres de carbone,
une ou plusieurs couches intermédiaires (2), et une seconde couche (3) en matière plastique renforcée par des fibres de carbone,
dans laquelle les couches (1, 2, 3) sont disposées au moins par sections sensiblement les unes au-dessus des autres,
dans laquelle ladite une ou chacune des couches intermédiaires (2) comprend un tissu en fibres de carbone (8) dont les fibres de carbone sont
orientées de manière sensiblement unidirectionnelle, **caractérisée en ce que** les première et seconde couches (1, 3) et ladite une ou plusieurs couches intermédiaires (2) s'étendent de manière continue sur l'ensemble du tracé de la semelle intérieure.

2. Semelle d'insertion selon l'une des revendications précédentes, **caractérisée en ce que** les première et seconde couches (1, 3) comprennent respectivement un tissu en fibres de carbone (9) dont les fibres de carbone sont de préférence tissées en armure sergée.

3. Semelle intérieure selon la revendication 2, **caractérisée en ce que** les fibres de carbone du tissu en fibres de carbone (9) des première et seconde couches (1, 3) sont orientées sensiblement à un angle de 0°/90° par rapport aux fibres de carbone du tissu en fibres de carbone (8) de ladite une ou plusieurs couches intermédiaires (2).

4. Semelle d'insertion selon l'une des revendications précédentes, **caractérisée en ce que** les première et seconde couches (1, 3) forment respectivement une surface sensiblement plane, de préférence continue.

5. Semelle d'insertion selon l'une des revendications précédentes, **caractérisée en ce que** la semelle intérieure (10) présente une épaisseur de couche constante.

6. Semelle d'insertion selon l'une des revendications précédentes, **caractérisée en ce que** la semelle intérieure (10) présente une épaisseur de couche d'au plus 1,2 mm, de préférence d'au plus 1,0 mm, et/ou les première et seconde couches (1, 3) présentent une épaisseur de couche d'au plus 0,3 mm, de préférence d'au plus 0,25 mm, et/ou ladite une ou plusieurs couches intermédiaires (2) présente une épaisseur de couche totale d'au plus 0,6 mm, d'au plus 0,5 mm.

7. Semelle d'insertion selon l'une des revendications précédentes, **caractérisée en ce qu'**une zone de la semelle intérieure (10), en particulier une zone qui n'est pas sollicitée par un talon, présente un bombement (13), de préférence unique, dans laquelle le bombement a en particulier un sommet avec deux côtés (15, 16), dans laquelle un côté arrière (15) jouxte en particulier une zone qui est sollicitée par le talon, et un côté avant (16) jouxte en particulier la zone ou fait partie de celle qui n'est pas sollicitée par le talon.

8. Semelle d'insertion selon l'une des revendications précédentes, **caractérisée en ce qu'**il existe une moulure (12) dans une zone de la semelle d'insertion (10), en particulier une zone qui est sollicitée par un talon, qui est en particulier sensiblement longitudinale et/ou dont la longueur s'étend dans une direction d'extension (17) de la semelle intérieure (10).

9. Semelle d'insertion selon l'une des revendications précédentes, **caractérisée en ce qu'**une couche la plus à l'extérieur de la structure de couches et/ou de la semelle intérieure est un tissu déchirable.

10. Semelle d'insertion selon l'une des revendications précédentes, **caractérisée en ce que** celle-ci est enrobée, en particulier entièrement, d'un matériau en mousse.

11. Chaussure comportant une semelle intérieure selon l'une des revendications précédentes.

12. Utilisation d'une semelle intérieure (10) selon l'une des revendications 1 à 10 pour une chaussure destinée à améliorer la performance de marche,
dans laquelle la semelle intérieure (10) est insérée dans la chaussure de façon amovible, de manière préférée d'une semelle intérieure amovible, de manière plus préférée sous une semelle intérieure amovible de la chaussure.

13. Procédé pour fabriquer une semelle intérieure, selon l'une des revendications 1 à 10, destinée à être insérée de manière amovible dans une chaussure, comportant les étapes suivantes :
- fournir un tissu en fibres de carbone pré-imprégné de matière plastique, de préférence de résine époxyde, dont les fibres de carbone sont orientées de préférence de manière sensiblement unidirectionnelle ;
- fournir un tissu en fibres de carbone pré-imprégné de matière plastique, de préférence de résine époxyde, dont les fibres de carbone sont tissées de préférence en armure sergée ;
- disposer en couches le tissu en fibres de carbone pré-imprégné et le tissu en fibres de carbone pré-imprégné pour former une structure de couches de telle sorte que les fibres de carbone du tissu en fibres de carbone forment une première couche et une seconde couche, et les fibres de carbone du tissu en fibres de carbone forment une ou plusieurs couches intermédiaires qui sont disposées entre les première et seconde couches, dans lequel les fibres de carbone du tissu en fibres de carbone sont orientées pratiquement à un angle de 0°/90° par rapport aux fibres de carbone du tissu en fibre de carbone qui forme les première et seconde couches, dans lequel les fibres de carbone de ladite une ou de chacune des couches intermédiaires sont orientées de manière sensiblement unidirectionnelle et
dans lequel les première et seconde couches et ladite une ou plusieurs couches intermédiaires s'étendent de manière continue sur tout le tracé de la semelle intérieure ;
- démouler la structure de couches par durcissement thermique pour obtenir une plaque plane en fibres de carbone renforcée par une matière plastique ayant une épaisseur de couche de préférence constante ;
- découper la semelle intérieure de la plaque en fibres de carbone renforcée par une matière plastique.
